# EUROPÄISCHE PATENTSCHRIFT

(11) **EP 4 155 852 B1**
(45) Veröffentlichungstag und Bekanntmachung des Hinweises auf die Patenterteilung: **04.06.2025**
(21) Anmeldenummer: 22191445.0
(22) Anmeldetag: 22.08.2022
(51) Int. Cl.: G05B 19/418, G05B 13/02

(54) **PROZESSORSCHALTUNG UND VERFAHREN ZUM ÜBERWACHEN EINES FÜGEPROZESSES VON WERKSTÜCKEN IN EINEM FÜGEAUTOMATEN SOWIE FÜGEAUTOMAT**
PROCESSOR CIRCUIT AND METHOD FOR MONITORING A JOINING PROCESS OF WORKPIECES IN A JOINING MACHINE AND JOINING MACHINE
CIRCUIT PROCESSEUR ET PROCÉDÉ DE SURVEILLANCE D'UN PROCESSUS D'ASSEMBLAGE DE PIÈCES DANS UN AUTOMATE D'ASSEMBLAGE AINSI QUE AUTOMATE D'ASSEMBLAGE

(30) Priorität: 22.09.2021 DE 102021124463
(43) Veröffentlichungstag der Anmeldung: 29.03.2023
(73) Patentinhaber: Audi AG, 85045 Ingolstadt (DE)
(72) Erfinder: MAYER, Mathias, 74336 Brackenheim (DE); HAUCK, Nick, 53177 Bonn (DE); BILLER, Martin, 74172 Neckarsulm (DE)

(56) Entgegenhaltungen:
- EP-A1- 3 705 962
- EP-A1- 3 812 105
- WO-A1-2019/103772
- DE-A1- 102019 209 100

## Beschreibung

Die Erfindung betrifft ein Verfahren und eine Prozessorschaltung zum Überwachen eines Fügeprozesses von Werkstücken in einem Fügeautomaten, um fehlerhaft gefügte Werkstücke zu detektieren. Zu der Erfindung gehört auch eine Fügeautomat, insbesondere ein Schweißautomat (z.B. ein Schweißroboter), mit der besagten Prozessorschaltung.

Die Qualitätsüberprüfung bei einem Fügeprozess im Karosseriebau von Kraftfahrzeugen, wie z.B. beim Widerstandspunktschweißen, findet heute vor allem durch Ultraschallprüfung statt. Die Überprüfung erfolgt manuell mit Unterstützung eines Ultraschallgerätes. Die Qualitätsergebnisse werden hierbei per Sichtprüfung des Prüfsignals, also des Ultraschallabbilds, und den Messungen des Prüfgerätes festgelegt. Die Prüfung erfolgt via Stichprobe, hierbei wird ein Bauteil zufällig ausgeschleust und dessen Qualität überprüft.

Falls Fehler in den gefügten Werkstücken eines Bauteils festgestellt werden, muss je nach Grad des Fehlers eine Gegenmaßnahme in Form von Parameteranpassungen in der Schweißsteuerung und/oder Nacharbeit der Bauteile durchgeführt werden.

Die Qualitätskontrolle erfolgt aber nicht "flächendeckend", d.h. nicht alle Karossen/Schweißpunkte werden durchgängig überprüft. Daher ist die Prüfung abhängig, wie repräsentativ die Stichprobe für die Gesamtpopulation ist. Die Schweißung erfolgt aber über eine adaptive Schweißsteuerung, d.h. jede Schweißung wird individuell gesteuert, weshalb man an einer entsprechend durchgehenden Prüfung interessiert ist.

Bei einer Stichprobengröße von 3 Bauteilen und einer Gesamtpopulation von 600 Fahrzeugen, unter den Annahme eines Konfidenzniveaus von 80% kann auf Grund der hohen Prozessvarianz nur mit 38% Wahrscheinlichkeit von der Stichprobe auf die Gesamtpopulation geschlossen werden.

Aus der US 2003/0234239 A1 ist bekannt, die Qualität von Schweißpunkten eines Punktschweißverfahrens mittels Ultraschall zu prüfen. Die resultierenden Prüfsignale werden als Eingabe einem künstlichen neuronalen Netzwerk zugeführt, das darauf trainiert ist, anhand von Prüfsignalen die Qualität von Schweißpunkten zu bewerten. Dieses Verfahren erfordert es weiterhin, jeden zu überprüfenden Schweißpunkt mittels Ultraschall zu untersuchen.

Aus der WO 2020/106725 A1 ist bekannt, mittels eines Modells des maschinellen Lernens Steuersignale für einen Fügeprozess zu erzeugen. Um das Modell zu trainieren, können Simulationsdaten zu dem Fügeprozess erzeugt werden, anhand derer das Training ausgeführt werden kann. Das Modell kann auch dazu genutzt werden, qualitativ minderwertige Fügestellen vorherzusagen. Das Training wird hierbei gezielt auf der Grundlage einer Vielzahl unterschiedlicher Werkstücke mit unterschiedlicher Form und/oder Beschaffenheit durchgeführt. Dies macht die Beschaffung von Trainingsdaten besonders aufwendig.

Die DE 10 2019 209100 A1 beschreibt ein Verfahren zur Überwachung eines Laserstrahl-Schweißprozesses. Der Schweißprozess wird mit einem in Pixel unterteilten ereignisbasierten Sensor beobachte, der immer dann, wenn sich die auf ein Pixel einfallende Lichtintensität mindestens um einen vorgegebenen Prozentsatz ändert, ein mit diesem Pixel assoziiertes Ereignis ausgibt. Aus einer Gesamtmenge der vom Sensor ausgegebenen Ereignisse werden Teilmengen von Ereignissen ermittelt, die jeweils von unterschiedlichen, beim Schweißprozess freigesetzten, Spritzern des aufgeschmolzenen Materials herrühren. Aus den ermittelten Teilmengen von Ereignissen wird eine Qualitätsbeurteilung für den Schweißprozess und/oder für das Werkstück ausgewertet. Die vom Sensor ausgegebenen Ereignisse können einem künstlichen neuronalen Netzwerk (KNN), zugeführt werden. Die Ereignisse können auch direkt dem KNN zugeführt werden, so dass das KNN die Aufgabe übernehmen kann, Teilmengen von Ereignissen, die von unterschiedlichen Spritzern herrühren, zu ermitteln. Das KNN kann die Ermittlung der Qualitätsbeurteilung unterstützen oder ganz übernehmen.

Die EP 3 812 105 A1 beschreibt ein System und ein Verfahren zum Steuern eines Schweißroboters unter Verwendung verschiedener maschineller Lernverfahren. Das Verfahren umfasst das Erhalten von Betriebsdaten des Schweißroboters während des Schweißens und das Erhalten von Bilddaten eines geschweißten Werkstücks. Die Bilddaten werden verarbeitet, um Parameter des geschweißten Werkstücks zu bestimmen, und die Parameter werden verarbeitet, um eine Qualität des geschweißten Werkstücks zu bestimmen, indem die Parameter unter Verwendung einer Bewertungsfunktion bewertet werden. Die Ergebnisse der Bewertungsfunktion werden in ein maschinelles Lernmodell eingegeben. Die Ergebnisse der Bewertungsfunktion werden unter Verwendung des maschinellen Lernmodells auf die erhaltenen Betriebsdaten angewendet, um die Betriebsdaten zu modifizieren, um das Schweißen zu verbessern. Die modifizierten Betriebsdaten werden zur Steuerung des Schweißroboters verwendet.

Der Erfindung liegt die Aufgabe zugrunde, einen Fügeautomaten dahingehend zu überwachen, dass minderwertig gefügte Werkstücke erkannt und ausgesondert werden.

Die Aufgabe wird durch die Gegenstände der unabhängigen Patentansprüche gelöst. Vorteilhafte Weiterbildungen der Erfindung ergeben sich durch die Merkmale der abhängigen Patentansprüche, die folgende Beschreibung sowie die Figur.

Als eine Lösung umfasst die Erfindung ein Verfahren zum Überwachen eines Fügeprozesses von Werkstücken in einem Fügeautomaten. Ein gefügtes Werkstück kann hierbei durch Fügen von zumindest zwei Fügeteilen erzeugt werden. Es wird maschinelles Lernen genutzt, um die Qualität der Fügestellen zu ermitteln. In einer Trainingsphase für ein Schätzmodell des maschinellen Lernens werden hierzu in dem Fügeautomaten und/oder in zumindest einem anderen Fügeautomaten Vorläufer-Werkstücke mittels des Fügeprozesses (aus Vorläufer-Fügeteilen) gefügt (dauerhaft verbunden) und hierbei ein aus zumindest einem vorbestimmten Prozessparameter und zumindest einer gemessenen und/oder berechneten Prozessvariablen gebildetes digitales Prozessabbild des Fügeprozesses für das jeweilige Vorläufer-Werkstück erfasst. Die Vorläufer-Werkstücke sind dabei vom selben Werkstücktyp wie die Werkstücke selbst. Mit anderen Worten wird der Fügeprozess für Werkstücke des zu überwachenden Werkstücktyps beobachtet (diese Werkstücke sind hier als Vorläufer-Werkstücke bezeichnet). Als Werkstücke können beispielsweise Rahmen oder Karosserien beispielsweise aus Blechen oder Profilteilen gefügt werden. Das Fügen kann z.B. Schweißen und/oder Löten und/oder Kleben vorsehen. In dem digitalen Prozessabbild werden die zu dem Fügeprozess verfügbaren Prozessparameter (vorgegebene Größen für den Fügeprozess) und Prozessvariablen (wie sie sich im Verlauf des Fügeprozesses dynamisch ergeben, also ein jeweiliges Prozesssignal) zusammengefasst oder gespeichert. Das jeweilige Prozessabbild stellt somit einen Datensatz der, welchen einen Fügedurchgang bestimmter Werkstücke, also einen einzelnen Durchlauf des Fügeprozesses, beschreibt. Entsprechende Daten können beispielsweise aus einem Feldbus und/oder aus Sensoren ausgelesen oder erfasst werden. Diesem jeweiligen Prozessabbild bei einem Fügedurchgang muss jeweils die daraus resultierende Qualität zugeordnet werden.

An den gefügten Vorläufer-Werkstücken wird hierzu mittels einer vorbestimmten Prüfmethode ein Prüfsignal, das mit einer Fügequalität der gefügten Werkstücke (d.h. der gefertigten Bauteils) korreliert oder davon abhängig ist, ermittelt und mittels einer Auswertemethode eine die ermittelte Fügequalität signalisierende Qualitätsangabe erzeugt. Zunächst kann also mit einer herkömmlichen Prüfmethode, beispielsweise durch manuelles Prüfen mittels eines Prüfgeräts, ein Prüfsignal erzeugt werden, beispielsweise ein Messsignal. Welche Prüfmethode sich hier eignet, kann der Fachmann anhand des zu überwachenden Fügeprozesses festlegen. Prüfsignale, die mit der zu überwachenden Fügequalität beispielsweise von Fügestellen korrelieren, sind an sich aus dem Stand der Technik bekannt. Ein Prüfsignal kann z.B. ein empfangenes Ultraschallsignal sein. Die Auswertemethode gibt eine Zuordnung von einem Prüfsignal zu einer Qualitätsangabe (beispielsweise eine binäre Qualitätsangabe "genügend" und "ungenügend") an.

Die Zuordnung von Prozessabbild zu resultierender Qualitätsangabe muss nun automatisiert werden. Mittels einer vorbestimmten Trainingsmethode wird hierzu ein Schätzmodell des maschinellen Lernens erzeugt, welches als Eingabe das jeweilige digitale Prozessabbild empfängt und zu der Eingabe eine geschätzte Qualitätsangabe als Ausgabe ausgibt, die gemäß der signalisierten Qualitätsangabe eintrainiert wird. Als Schätzmodell kann beispielsweise ein künstliches neuronales Netzwerk und/oder ein Decision-Tree-Modell genutzt werden, wobei dies nur Beispiele sind und eine besonders vorteilhafte Ausgestaltung des Schätzmodells im weiteren Verlauf der Beschreibung noch beschrieben werden wird. Als Trainingsmethode kann beispielsweise das an sich bekannte überwachte Lernen (supervised learning) und/oder das unüberwachte Lernen (unsupervised learning) zugrundgelegt werden.

Wenn dann das Schätzmodell erstellt oder trainiert ist, kann es im Betrieb des Fügeautomaten beim Fügen der zu überwachenden Werkstücke genutzt werden. In dieser Betriebsphase, in welcher der Fügeautomat die automatisiert zu überwachenden Werkstücke mittels des Fügeprozesses fügt, wird ebenfalls das jeweilige digitale Prozessabbild des Fügeprozesses des jeweiligen Werkstücks ermittelt und dem Schätzmodell als Eingabe zugeführt. Mittels des Schätzmodells wird die geschätzte Qualitätsangabe bezüglich der gefügten Werkstücks erzeugt. Man kann hier also die eigentliche Prüfmethode unterlassen oder weglassen. Bei den durch den Fügeautomaten gefügten Werkstücken wird dann eine Aussonderungsmaßnahme zum Aussondern solcher der Werkstücke ausgelöst, bei denen die durch das Schätzmodell geschätzte Qualitätsangabe ein vorbestimmtes Aussonderkriterium erfüllt.

Sobald also das Schätzmodell bereitsteht, kann eine unmittelbare automatisierte Zuordnung vom Prozessabbild zu einer geschätzten Qualitätsangabe erfolgen. Eine Prüfung mittels der Prüfmethode ist in diesem Stadium nicht mehr notwendig. Die Aussonderungsmaßnahme kann immer dann ausgelöst werden, wenn bei gefügten Werkstücken ermittelt wird, dass das Schätzmodell eine Qualitätsangabe schätzt, die dem Aussonderkriterium entspricht oder dieses erfüllt. Der Fachmann kann durch Festlegen des Aussonderkriteriums entscheiden oder steuern, welche gefügten Werkstücke der Aussonderungsmaßnahme zugeführt werden sollen, also als fehlerhaft oder qualitätiv ungenügend einzustufen oder einzuschätzen sind.

Durch die Erfindung ergibt sich der Vorteil, dass mittels des Fügeautomaten bereits Vorläufer-Werkstücke in einem herkömmlichen Ablauf des Fügeprozesses gefertigt werden können und hierbei (nebenbei oder beiläufig) das Trainingsmaterial oder die Trainingsdaten für das Schätzmodell ermittelt werden können. Sobald das Training oder das Berechnen des Schätzmodells dann abgeschlossen oder fertig ist, kann auf die automatisierte Qualitätsüberwachung mittels des Schätzmodells gewechselt werden, das heißt die Betriebsphase für das Schätzmodell gestartet werden. Bei dieser kann in vorteilhafter Weise auf die Prüfmethode verzichtet werden.

Die Erfindung umfasst auch Weiterbildungen, durch die sich zusätzliche Vorteile ergeben.

Eine Weiterbildung umfasst, dass Trainingsmethode einen Machine-Learning-Algorithmus umfasst und/oder das Schätzmodell ein künstliches neuronales Netzwerk und/oder einen Decision-Tree und/oder zumindest einen der folgenden Schätzalgorithmen umfasst: Random Forest, Support Vector Machine, SVM, und XGBoost, um Beispiele zu nennen. Zusätzlich oder alternativ zu den bekannten Machine-Learning-Algorithmen, wie künstliches neuronales Netzwerk und/oder Decision-Tree, kann das Schätzmodell somit auch auf Grundlage eines Schätzalgorithmus oder mehrerer miteinander kombinierter Schätzalgorithmen, wie die genannten, beruhen. Das Machine-Learning oder das maschinelle Lernen bezieht sich hierbei darauf, die Konfigurationsparameter dieser Schätzalgorithmen an die Trainingsdaten, wie sie in der Trainingsphase ermittelt werden (vorgegebene oder gelabelte Zuordnung von digitalen Prozessabbildern zu Qualitätsangaben), anzupassen, was ebenfalls automatisiert erfolgen kann. Es kann auf die bereits beschriebenen Methoden des überwachten und/oder unüberwachten Lernens zurückgegriffen werden.

Eine Weiterbildung umfasst, dass in dem Schätzmodell mehrere oder alle der Schätzalgorithmen gemäß dem Mehrheitswahlprinzip, dem sogenannten ensemble learning, kombiniert betrieben werden. Es hat sich herausgestellt, dass dies eine besonders vorteilhafte Variante eines Schätzmodells ist. Insbesondere können zwei oder drei der oben genannten Schätzalgorithmen Random Forest, SVM, XGBoost betrieben werden, das heißt mit dem jeweiligen Prozessabbild als Eingabe oder Eingangsdaten versorgt werden, woraufhin sich dann pro Schätzalgorithmus eine geschätzte Qualitätsangabe oder eine binäre Zwischenangabe in Bezug auf das Aussonderkriterium (erfüllt oder nicht-erfüllt) vorliegt. Sodann kann zum Beispiel nach dem Mehrheitswahlprinzip (mehr als 50 Prozent oder mehr als X Prozent mit X größer als 50) eine einzelne finale Aussage oder ein finales Signal ermittelt oder zusammengefasst werden, ob das Aussonderkriterium insgesamt erfüllt ist. Es hat sich herausgestellt, dass hierdurch Schwächen oder Unzulänglichkeiten einzelner Schätzalgorithmen kompensiert werden können.

Eine Weiterbildung umfasst, dass zum Erzeugen der Eingaben (für das Schätzmodell) ein jeweiliges Zeitsignal zumindest einer Prozessvariable mittels eines Dynamic-Time-Warping auf eine vorbestimmte Signallänge skaliert oder gedehnt/gestaucht wird und insbesondere durch das Schätzmodell mit einem Referenzsignal verglichen wird. Hierdurch können unterschiedlich lange Zeitsignale dennoch einheitlich verarbeitet werden. Unterschiedlich lange Zeitsignale können sich beispielsweise ergeben, wenn bei einem geregelten Fügeprozess durch die Regelung der Fügeprozess pro zu fügender Werkstücke unterschiedlich lange andauern kann (z.B. mit einer Toleranz oder Schwankung in der Dauer in einem Bereich von 1 Sekunde bis 5 Minuten). Dennoch kann mittels des Dynamic-Time-Warping eine einheitliche vorbestimmte Signallänge eingestellt werden, sodass mittels desselben Schätzmodells auch unterschiedlich lang andauernde Fügevorgänge von Werkstücken bewertet oder überprüft werden können. Das Referenzsignal kann einen Sollverlauf vorgeben, der sich bei fehlerfreiem Ablauf des Fügeprozesses ergeben muss.

Eine Weiterbildung umfasst, dass der Prozessparameter zumindest einen der folgenden Prozessparametervorsieht oder berücksichtigt: eine Blechdicke zumindest eines der Werkstücke, eine Geometrie der Werkstücke. Die Prozessparameter stellen also statische oder vorgegebene Größen oder Quantitäten dar, wie sie beispielsweise aus Konstruktionsdaten, z.B. CAD-Daten (CAD - Computer Added Design) entnommen werden können. Hierdurch kann in vorteilhafter Weise erreicht werden, dass eine Prozessvariable in Abhängigkeit von einem Prozessparameter interpretiert oder ausgewertet werden kann. So können sich beispielsweise für unterschiedliche Werte der Blechdicke unterschiedliche Zeitsignale und/oder unterschiedliche Werte für Prozessvariablen ergeben und dennoch kann stets eine ausreichend große Qualität (Aussonderkriterium unerfüllt) gegeben sein. Dies kann dadurch erkannt oder korrekt interpretiert werden kann, dass stets ein Prozessparameter, wie beispielsweise die Blechdicke, berücksichtigt oder beobachtet wird und die zumindest eine Prozessvariable je nach aktuellem Wert des zumindest einen Prozessparameters anders interpretiert oder bewertet wird. Anders herum kann ein und derselbe Wert für eine Prozessvariable einmal auf ein erfülltes Aussonderkriterium (mindere Qualität) und einem auf ein unerfülltes Aussonderkriterium (ausreichende Qualität) hinweisen, je nach Wert des zumindest einen Prozessparameters, also z.B. je nach Blechdicke.

Eine Weiterbildung umfasst, dass die zumindest eine Prozessvariable zumindest eine der folgenden Prozessvariablen berücksichtigt oder vorsieht: ein Eingriffssignal einer Prozesssteuerung in den Fügeprozess; eine Stromstärke, ein Spannungssignal einer Spannungsstärke, einen elektrischen Widerstand, eine Transportgeschwindigkeit der Blechstücke und/oder eines Fügematerials. Diese Prozessvariablen haben sich als besonders aussagekräftig beim Ermitteln einer Qualitätsangabe erwiesen.

Eine Weiterbildung umfasst, dass in der Betriebsphase mehr als 80% oder alle der gefügten Werkstücke mittels des Schätzmodells überwacht werden. Mit anderen Worten ist nicht nur eine stichprobenartige Überprüfung einzelner gefügter Werkstücke und/oder deren Fügestellen notwendig oder möglich, sondern mehr als 80 Prozent aller gefügten Werkstücke oder alle gefügten Werkstücke können geprüft werden.

Eine Weiterbildung umfasst, dass in der Betriebsphase die Prüfmethode nur auf einige der gefügten Werkstücke oder auf keines der gefügten Werkstücke angewendet wird. Insbesondere ist man also in der Lage, auf die Prüfmethode, beispielsweise ein manuelles Prüfen mittels eines Ultraschallgeräts, zu verzichten oder hier nur beispielsweise ausgesonderte gefügte Werkstücke und/oder eine vorbestimmte Stichprobe mittels der Prüfmethode zu überwachen.

Eine Weiterbildung umfasst, dass die Prüfmethode eine Ultraschallprüfung umfasst und das Prüfsignal ein Ultraschall-Abbild einer durch den Fügeprozess erzeugten Fügestelle umfasst. Als Prüfmethode zum Trainieren eines Schätzmodells hat sich insbesondere die Ultraschallprüfung als geeignet erwiesen, da deren Prüfsignal sich als besonders geeignet für die Verwendung im Bereich des maschinellen Lernens erwiesen hat. Alternative oder zusätzliche Prüfmethoden sind zumindest eine der Folgenden: Röntgenanalyse, Belastungsprobe.

Eine Weiterbildung umfasst, dass die Auswertemethode vorsieht, dass das Prüfsignal einer Bedienperson an einer Bedienschnittstelle präsentiert wird und über die Bedienschnittstelle eine Nutzereingabe der Bedienperson empfangen wird. Die Nutzereingabe kann die Qualitätsangabe enthalten oder angeben. Somit kann die Auswertemethode auch ein Nutzerfeedback einer Bedienperson, also eine Nutzereingabe, vorsehen, sodass auch die Expertise einer Bedienperson beim Erzeugen von Trainingsdaten einfließen oder genutzt werden kann. Die Bedienperson kann beispielsweise an einem Bildschirm das Prüfsignal, beispielsweise das beschriebene Ultraschall-Abbild, angezeigt werden und über ein Eingabeelement, beispielsweise eine Tastatur und/oder eine Maus und/oder ein GOI (Graphical User Interface) kann die Nutzereingabe betreffend die Qualitätsangabe empfangen werden. Die Nutzereingabe kann dann als sogenanntes Label für die Trainingsphase beim maschinellen Lernen genutzt werden.

Eine Weiterbildung sieht vor, dass die Aussonderungsmaßnahme umfasst, dass die jeweils ausgesonderten gefügten Werkstücke mittels der Prüfmethode untersucht wird und/oder verschrottet wird. Ein ausgesondertes gefügtes Werkstück kann also nachuntersucht werden, indem hierfür die Prüfmethode angewendet wird. Dies vermeidet unnötigen Ausschuss. Als eine zusätzliche oder alternative Maßnahme der Aussonderung kann eine Verschrottung vorgesehen sein.

Eine Weiterbildung umfasst, dass der Fügeprozess ein Schweißprozess, insbesondere eine Widerstandspunktschweißen, ist. Im Zusammenhang mit einem Schweißprozess, insbesondere einem Widerstandspunktschweißen, hat sich eine besonders hohe Korrelation zwischen einem digitalen Prozessabbild, wie es mittels eines Fügeautomaten in dessen Betrieb beim Durchführen des Fügeprozesses erzeugt werden kann, mit der geschätzten Qualitätsangabe als besonders hoch erwiesen, das heißt eine Fehlschätzung ist für einen Schweißprozess, insbesondere ein Widerstandspunktschweißen, das als Prozessabbild eine oder mehrere elektrische Größen bereitstellen oder bieten kann, besonders gering.

Als eine weitere Lösung umfasst die Erfindung die Prozesslösung mit einer Prozessorschaltung zum Überwachen eines Fügeautomaten, wobei die Prozessorschaltung dazu eingerichtet ist, in einer Betriebsphase des Fügeautomaten Prozessparameter und Prozessvariablen eines Fügeprozesses von Werkstücken zu ermitteln und einem Schätzmodell als Eingabe zuzuführen und mittels des Schätzmodells eine jeweilige geschätzte Qualitätsangabe bezüglich der gefügten Werkstücke zu erzeugen und Aussonderungsmaßnahme zum Aussondern solcher der Werkstücke auszulösen, bei denen die geschätzte Qualitätsangabe ein vorbestimmtes Aussonderkriterium erfüllt. Die Prozessorschaltung kann eine Datenverarbeitungsvorrichtung oder eine Prozessoreinrichtung aufweisen, die dazu eingerichtet ist, die beschriebenen Verfahrensschritte durchzuführen. Die Prozessorschaltung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessorschaltung Programmcode aufweisen, der dazu eingerichtet ist, bei Ausführen durch die Prozessoreinrichtung die Verfahrensschritte durchzuführen. Der Programmcode kann in einem Datenspeicher der Prozessorschaltung gespeichert sein. Die Prozessorschaltung kann beispielsweise als Bestandteil einer Steuerschaltung oder Steuerung des Fügeautomaten vorgesehen sein. Die Prozessorschaltung kann auch getrennt von dem Fügeautomaten beispielsweise in einem Leitstand oder in einem Zentralcomputer einer Werkshalle, vorgesehen werden. Die Prozessorschaltung kann als ein Verbund aus mehreren Steuerschaltungen realisiert werden, also als eine verteilte Lösung. Die Prozessorschaltung kann ganz oder teilweise als ein Server des Internets, beispielsweise als ein Cloudserver, realisiert sein. Das Verfahren kann in einer virtuellen Maschine implementiert sein oder ausgeführt werden. Die beschriebenen Daten z.B. des digitalen Prozessabbilds können von dem Fügeautomaten zu der Prozessorschaltung beispielsweise über eine Kommunikationsverbindung, z.B. eine IP-Verbindung (Internetverbindung), übertragen werden.

Als eine weitere Lösung umfasst die Erfindung einen Fügeautomaten, insbesondere einen Schweißautomaten (z.B. einen Schweißroboter), mit einer Ausführungsform der erfindungsgemäßen Prozessorschaltung. Der Fügeautomat kann beispielsweise ein Roboter für das Fügen oder den Fügeprozess vorsehen. Mit dem Roboter kann die Prozessorschaltung gekoppelt sein. Die Prozessorschaltung kann mit zumindest einem Sensor des Fügeautomaten und/oder zumindest einem Regler des Fügeautomaten gekoppelt sein, um das beschriebene digitale Prozessabbild zu ermitteln.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: eine schematische Darstellung einer Ausführungsform des erfindungsgemäßen Fügeautomaten;
- Fig. 2: ein Flussschaubild zur Veranschaulichung einer Ausführungsform des erfindungsgemäßen Verfahrens.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

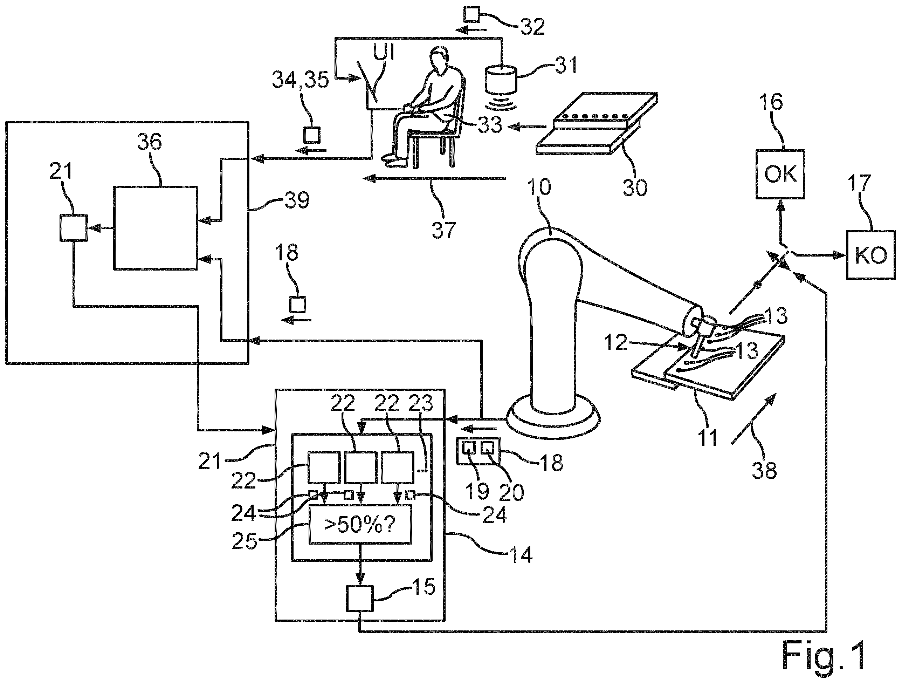

Fig. 1 zeigt einen Fügeautomaten 10, bei dem es sich beispielsweise um einen Schweißautomaten, insbesondere für ein Widerstandspunktschweißen, handeln kann. Mittels des Fügeautomaten 10 können Werkstücke 11 in einem Fügeprozess 12 an Fügestellen 13 miteinander verbunden oder gefügt werden. Ein gefügtes Werkstück 11 kann aus zwei oder mehr als zwei Fügeteilen, z.B. Blechen, durch den Fügeautomaten 10 hergestellt werden. Es kann sich um eine Produktion von Karosserien von Kraftfahrzeugen handeln. Bei dem Fügeautomaten 10 kann eine Prozessorschaltung 14 abschätzen oder ermitteln, ob eine Qualität der Fügestellen 13 bei den Werkstücken 11 ausreichend ist oder ob (im Gegensatz dazu) die gefügten Werkstücke 11 ein vorbestimmtes Aussonderkriterium 15 erfüllen. Entsprechend der Überprüfung mittels des Aussonderkriteriums 15 können die gefügten Werkstücke 11 als in Ordnung für eine Weiterverwendung 16 (z.B. in einen Kraftahrzeug) oder als nicht in Ordnung und damit einer vorbestimmten Aussonderungsmaßnahme 17 zugeführt werden, was in Fig. 1 durch einen Schalter symbolisiert ist. Mittels der Prozessorschaltung 14 ist es dabei nicht notwendig, die gefügten Werkstücke 11 selbst einer separaten oder eigenen Prüfmethode beispielsweise mittels Ultraschall zu unterziehen. Zudem können alle in den Fügeprozess 12 gefügten Werkstücke 11 untersucht werden, das heißt es kann auf eine Beschränkung auf Stichproben kleiner als 100 Prozent, insbesondere kleiner als 80 Prozent, verzichtet werden.

Dies kann erreicht werden, indem die Prozessorschaltung 14 während der Durchführung des Fügeprozesses 12 ein digitales Prozessabbild 18 aus dem Fügeautomaten 10 und/oder aus vorgegebenen Konstruktionsdaten, z.B. CAD-Daten, ermittelt. Das Prozessabbild 18 kann zumindest einen Prozessparameter 19, beispielsweise eine Geometrie der verarbeiteten oder gefügten Fügeteile und zumindest eine Prozessvariable 20, beispielsweise ein Reglersignal und/oder ein Stromstärkesignal und/oder ein Spannungssignal, empfangen, wie sie beispielsweise durch zumindest einen Regler des Fügeautomaten 10 während der Durchführung des Fügeprozesses 12, für die zu fügenden Werkstücke 11 eingestellt oder gestellt wurden. Das digitale Prozessabbild 18 kann einem Schätzmodell 21 zugeführt werden, das durch die Prozessorschaltung 14 betrieben werden kann. Das Schätzmodell 21 kann beispielsweise auf einer Software beruhen, die durch zumindest einen Mikroprozessor der Prozessorschaltung 11 ausgeführt oder betrieben werden kann. Das Schätzmodell 21 kann insbesondere auf mehreren Schätzalgorithmen 22 beruhen, die alle individuell oder unabhängig voneinander mit zumindest einem Teil oder allen Daten des Prozessabbilds 18 versorgt oder betrieben werden können. In Fig. 1 sind beispielhaft drei Schätzalgorithmen 22 dargestellt. Auslassungspunkte 23 sollen andeuten, dass mehr oder weniger als drei Schätzalgorithmen 22 benutzt werden können. Beispiele für die Schätzalgorithmen sind bereits genannt. Eine jeweilige Schätzausgabe 24 jedes der Schätzalgorithmen 22 kann mittels eines Mehrheitswahlprinzips 25 dahingehend zusammengefasst werden, dass für den Fall, dass eine vorbestimmte Mehrheit der Schätzalgorithmen 22 (z.B. mehr als 50 %) signalisiert, dass eine Qualität kleiner als ein vorgegebener Schwellenwert ist oder dass ein jeweiliges Algorithmen-individuelles Aussonderkriterium erfüllt ist, insgesamt das Aussonderkriterium 15 als erfüllt angesehen wird. Andernfalls, falls die Mehrheit signalisiert, dass die Qualität der Fügestellen 13 ausreicht, ist das Aussonderkriterium 15 unerfüllt.

Um das Schätzmodell 21 zu erzeugen, kann der Fügeprozess 12 im Voraus oder in historischen Fügedurchgängen an Vorläufer-Werkstücken 30 durchgeführt werden. Hierfür kann der Fügeautomat 10 und/oder kann zumindest ein anderer, gleichartiger Fügeautomat (nicht dargestellt) genutzt werden. Die gefügten Vorläufer-Werkstücke 30 können mittels einer vorbestimmten Prüfmethode 31, beispielsweise einer Ultraschallprüfung, analysiert oder geprüft werden, wodurch sich zusätzlich zu dem jeweiligen Prozessabbild 18 für die gefügten Vorläufer-Werkstücke 30 ein Prüfsignal 32 ergibt. Das Prüfsignal 32 kann beispielsweise einer Bedienperson 33 beispielsweise über eine Benutzerschnittstelle UI, die beispielsweise einen Bildschirm umfassen kann, präsentiert werden und von der Bedienperson 33 kann beispielsweise über eine Tastatur oder allgemein einer GUI eine Nutzereingabe 34 als vorgegebene oder Ground-Truth oder Qualitätsangabe 35 empfangen werden. Mittels der Qualitätsangabe 35 und dem jeweiligen Prozessabbild 18 für die gefügten Vorläufer-Werkstücke 30 kann mittels eines Trainingsalgorithmus oder einer Trainingsmethode 36 in einer Trainingsphase 37 das Schätzmodell 21 berechnet oder erzeugt oder ermittelt werden. Dieses trainierte Schätzmodell 21 kann dann in die Prozessorschaltung 14 übertragen werden, wo es dann in einer Betriebsphase 38 in der beschriebenen Weise genutzt werden kann.

Die Trainingsphase 37, insbesondere die Trainingsmethode 36, kann in einer Datenverarbeitungsanlage 39 durchgeführt werden, die einen Computer oder einen Computerverbund vorsehen kann, um die Trainingsmethode 36 durchzuführen.

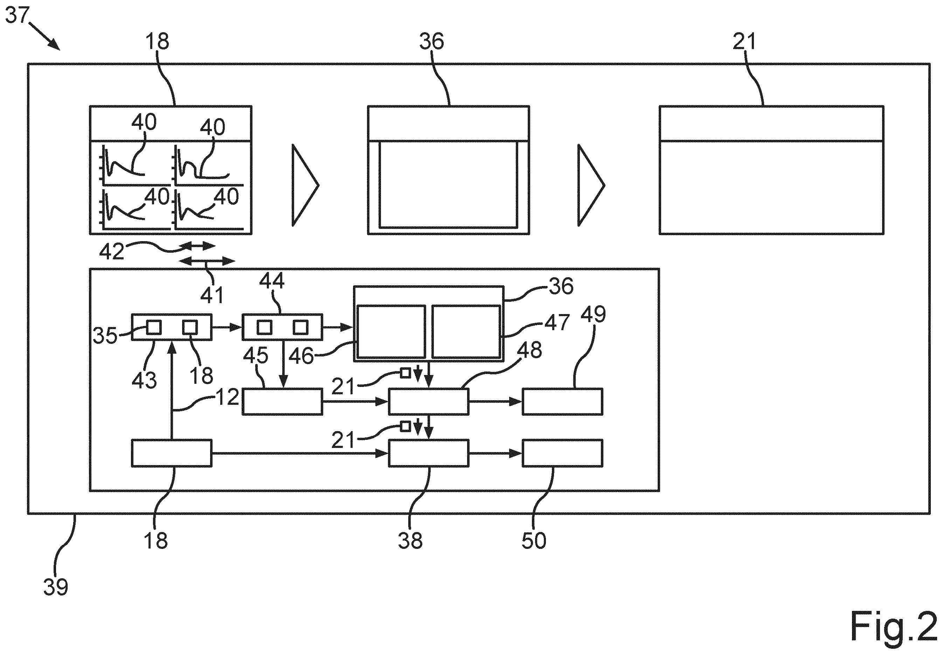

Fig. 2 veranschaulicht noch einmal die Trainingsphase 37. Dargestellt ist, wie Fertigungsdaten aus dem Fügeprozess 12 für die Vorläufer-Werkstücke 30 zu dem digitalen Prozessabbild 18 zusammengefasst werden können, beispielsweise Zeitsignale 40, die beispielhaft mittels eines Dynamic-Time-Warping 41 auf eine vorgegebene Signallänge 42 angepasst werden können. Mittels der Trainingsmethode 36 kann dann das Schätzmodell 21 erzeugt werden.

Die mittels der Vorläufer-Werkstücke 30 gewonnenen Qualitätsangaben 35 und die zugehörigen Prozessabbilder 18 stellen historische Daten 43 dar, die beim Ausführen des Fügeprozesses 12 ermittelt werden können. Die historischen Daten 43 können aufgeteilt werden in Trainingsdaten 44 und Testdaten 45. Mittels der Trainingsdaten 44 kann die Trainingsmethode 36 betrieben werden, die beispielsweise ein überwachtes Lernen 46 (supervised learning) und/oder ein unbewachtes Lernen 47 (unsupervised learning) umfassen kann. Das aus der Trainingsmethode 36 resultierende Schätzmodell 21 kann dann anhand der Testdaten 45 mittels einer Testmethode 48, wie sie an sich aus dem Stand der Technik bekannt ist, betrieben werden, um eine Testmetrik 49 zu ermitteln, die signalisiert, ob die historischen Daten 43 mittels des Schätzmodells 21 korrekt erkannt oder klassifiziert oder eingeordnet werden. Ist dies anhand der Testmetrik 49 erkannt, so kann die eigentliche Betriebsphase 38 erfolgen, in welcher aktuelle oder Echtzeit-Prozessdaten des Prozessabbilds 18 für die Werkstücke 11 durch das Schätzmodell 21 in der beschriebenen Weise überprüft werden können, um ein Steuersignal 50 in Abhängigkeit von der Überprüfung des Aussonderkriteriums 15 für das Zuführen der gefügten Werkstücke 11 zu der Weiterverwendung 16 beziehungsweise der Aussonderungsmaßnahme 17 zu steuern, wie es bereits beschrieben wurde.

Ein Machine-Learning/Kl-Algorithmus (KI - künstliche Intelligenz) ermöglicht somit die automatisierte Analyse von großen Datenmengen, wie sie bei digitalen Prozessabbildern anfallen. Sie können vorbestimmte Muster und vorbestimmte Auffälligkeiten in den gesammelten Daten der digitalen Prozessabbilder erkennen.

Für die Qualitätsprüfung wird ein solches Verfahren daher eingesetzt. Ein Algorithmus wird auf die Qualitätsergebnisse (z.B. "Dünner Punkt") trainiert. Als Eingangsgröße zum Trainieren des Algorithmus dienen Prozessvariablen und Prozessparameter. In diesen erkennt der Algorithmus Muster und verknüpft sie mit den Ausgangsgrößen in Form von Qualitätsergebnissen. Durch das digitale Prozessabbild der Schweißsteuerung, kann durch den Algorithmus eine 100%-Prüfung aller Schweißpunkte in Echtzeit erfolgen.

Der Algorithmus überprüft bevorzugt automatisiert alle Schweißpunkte hinsichtlich ihrer Qualität. Hierdurch ist man nicht mehr auf ein nichtrepräsentatives Stichprobenverfahren angewiesen. In der Folge kann die Produktqualität erhöht und Prozesseffizienz gesteigert werden.

In der Fig. 2 dargestellt ist eine Realisierung des Verfahrens. Mehrere Algorithmen werden zur Überwachung der Qualitätsergebnisse eingesetzt. Diese werden zur Mustererkennung mit eines historischen Training Datenset vorbereitet. Dabei vernetzten sie Eingangsgrößen mit einem Qualitätsergebnis. Sobald das Training abgeschlossen wurde, wird der Algorithmus mit Hilfe eines historischen Testdatensets validiert. Besteht der Algorithmus den Test, wird er im Qualitätsprozess eingesetzte.

Aus dem Schweißprozess werden Daten an den Algorithmus gestreamt oder übertragen. Dieser ermittelt, bevorzugt in Echtzeit im Fügeprozess die angelernten Qualitätsergebnisse, und sagt sie auf Basis der erkannten Muster voraus.

Insgesamt zeigen die Beispiele, wie ein Machine-Learning-Algorithmus zur Vorhersage von Ultraschall-Prüfergebnissen bereitgestellt werden kann.

## Patentansprüche

1. Verfahren zum Überwachen eines Fügeprozesses (12) von Werkstücken (11) in einem Fügeautomaten (10), wobei
in einer Trainingsphase (37):
in dem Fügeautomaten (10) und/oder in zumindest einem anderen Fügeautomaten (10) Vorläufer-Werkstücke (30) mittels des Fügeprozesses (12) gefügt und hierbei ein aus zumindest einem vorbestimmten Prozessparameter (19) und zumindest einer gemessenen und/oder berechneten Prozessvariablen (20) gebildetes digitales Prozessabbild (18) des Fügeprozesses (12) für das jeweilige Vorläufer-Werkstück (30) erfasst wird, wobei die Vorläufer-Werkstücke (30) vom selben Werkstücktyp wie die Werkstücke (11) sind, und
an den gefügten Vorläufer-Werkstücken (30) mittels einer vorbestimmten Prüfmethode (31) ein Prüfsignal (32), das mit einer Fügequalität der gefügten Werkstücke (11) korreliert, ermittelt und mittels einer Auswertemethode eine die ermittelte Fügequalität signalisierende Qualitätsangabe (35) erzeugt wird und
mittels einer vorbestimmten Trainingsmethode (36) ein Schätzmodell (21) des maschinellen Lernens erzeugt wird, welches als Eingabe das jeweilige digitale Prozessabbild (18) empfängt und der Eingabe eine geschätzte Qualitätsangabe (35) als Ausgabe zuordnet, die gemäß der signalisierten Qualitätsangabe (35) eintrainiert wird, und
in einer Betriebsphase (38),
in welcher der Fügeautomat (10) die Werkstücke (11) mittels des Fügeprozesses (12) fügt:
das digitale Prozessabbild (18) des Fügeprozesses (12) des jeweiligen Werkstücks (11) ermittelt und dem Schätzmodell (21) als Eingabe zugeführt wird und mittels des Schätzmodells (21) die geschätzte Qualitätsangabe (35) bezüglich des jeweiligen gefügten Werkstücks (11) erzeugt wird und
für die durch den Fügeautomaten (10) gefügten Werkstücke (11) eine Aussonderungsmaßnahme (17) zum Aussondern solcher der Werkstücke (11) ausgelöst wird, bei denen die geschätzte Qualitätsangabe (35) ein vorbestimmtes Aussonderkriterium (15) erfüllt.

2. Verfahren nach Anspruch 1, wobei Trainingsmethode (36) einen Machine-Learning-Algorithmus umfasst und/oder das Schätzmodell (21) ein künstliches neuronales Netzwerk und/oder einen Decision-Tree und/oder zumindest einen der folgenden Schätzalgorithmen (22) umfasst
• Random Forest,
• Support Vector Machine, SVM,
• XGBoost.

3. Verfahren nach Anspruch 2, wobei in dem Schätzmodell (21) mehrere oder alle der Schätzalgorithmen (22) gemäß dem Mehrheitswahlprinzip (25) kombiniert betrieben werden.

4. Verfahren nach einem der vorhergehenden Ansprüche, wobei zum Erzeugen der Eingaben ein jeweiliges Zeitsignal (40) zumindest einer Prozessvariable (20) mittels eines Dynamic-Time-Warping (41) auf eine vorbestimmte Signallänge (42) skaliert wird und in dem Schätzmodell (21) mit einem Referenzsignal verglichen wird.

5. Verfahren nach einem der vorhergehenden Ansprüche, wobei der zumindest eine Prozessparameter (19) zumindest einen der folgenden Prozessparameter umfasst: eine Blechdicke zumindest eines der Werkstücke (11), eine Geometrie der Werkstücke (11).

6. Verfahren nach einem der vorhergehenden Ansprüche, wobei die zumindest eine Prozessvariable (20) zumindest eine der folgenden Prozessvariablen umfasst: ein Eingriffssignal einer Prozesssteuerung in den Fügeprozess (12); eine Stromstärke, ein Spannungssignal einer Spannungsstärke, einen elektrischen Widerstand, eine Transportgeschwindigkeit der Blechstücke und/oder eines Fügematerials.

7. Verfahren nach einem der vorhergehenden Ansprüche, wobei in der Betriebsphase (38) mehr als 80% oder alle der gefügten Werkstücke (11) mittels des Schätzmodells (21) überwacht werden.

8. Verfahren nach einem der vorhergehenden Ansprüche, wobei in der Betriebsphase (38) die Prüfmethode (31) nur auf einige der gefügten Werkstücke (11) oder auf keines der gefügten Werkstücke (11) angewendet wird.

9. Verfahren nach einem der vorhergehenden Ansprüche, wobei die Prüfmethode (31) eine Ultraschallprüfung umfasst und das Prüfsignal (32) ein Ultraschall-Abbild einer durch den Fügeprozess (12) erzeugten Fügestelle (13) umfasst.

10. Verfahren nach einem der vorhergehenden Ansprüche, wobei die Auswertemethode umfasst, dass das Prüfsignal (32) einer Bedienperson (33) an einer Bedienschnittstelle präsentiert wird und über die Bedienschnittstelle eine Nutzereingabe (34) der Bedienperson (33), welche die Qualitätsangabe (35) angibt, empfangen wird.

11. Verfahren nach einem der vorhergehenden Ansprüche, wobei die Aussonderungsmaßnahme (17) umfasst, dass das jeweilige ausgesonderte Werkstück (11) mittels der Prüfmethode (31) untersucht wird und/oder verschrottet wird.

12. Verfahren nach einem der vorhergehenden Ansprüche, wobei der Fügeprozess (12) ein Schweißprozess, insbesondere eine Widerstandspunktschweißen, ist.

13. Prozessorschaltung (14) zum Überwachen eines Fügeprozesses (12) von Werkstücken (11) in einem Fügeautomaten (10) mit einem Verfahren gemäß Anspruch 1, wobei die Prozessorschaltung (14) dazu eingerichtet ist, in einer Betriebsphase (38) des Fügeautomaten (10) Prozessparameter (19) und Prozessvariablen (20) des Fügeprozesses (12) von Werkstücken (11) zu ermitteln und einem Schätzmodell (21) als Eingabe zuzuführen und mittels des Schätzmodells (21) eine jeweilige geschätzte Qualitätsangabe (35) bezüglich der gefügten Werkstücke (11) zu erzeugen und Aussonderungsmaßnahme (17) zum Aussondern solcher der Werkstücke (11) auszulösen, bei denen die geschätzte Qualitätsangabe (35) ein vorbestimmtes Aussonderkriterium (15) erfüllt.

14. Fügeautomat (10), insbesondere Schweißautomat, mit einer Prozessorschaltung (14) nach Anspruch 13.

## Claims

1. Method for monitoring a joining process (12) of workpieces (11) in an automatic joining machine (10), wherein
in a training phase (37):
precursor workpieces (30) are joined in the automatic joining machine (10) and/or in at least one other automatic joining machine (10) by means of the joining process (12) and hereby a digital process image (18) of the joining process (12), which is formed from at least one predetermined process parameter (19) and at least one measured and/or calculated process variable (20), is recorded for the respective precursor workpiece (30), wherein the precursor workpieces (30) are the same type of workpiece type as the workpieces (11), and
a test signal (32), which correlates with a joining quality of the joined workpieces (11), is determined on the joined precursor workpieces (30) by means of a predetermined testing method (31), and a quality indication (35) signaling the determined joining quality is generated by means of an evaluation method, and
an estimation model (21) of the machine learning is generated by means of a predetermined training method (36), which receives the respective digital process image (18) as input and assigns an estimated quality indication (35) to the input as output, which is trained in accordance with the signaled quality indication (35), and
in an operating phase (38),
in which the automatic joining machine (10) joins the workpieces (11) by means of the joining process (12):
the digital process image (18) of the joining process (12) of the respective workpiece (11) is determined and supplied to the estimation model (21) as input and the estimated quality indication (35) relating to the respective joined workpiece (11) is generated by means of the estimation model (21), and
for the workpieces (11) joined by the automatic joining machine (10), a rejection measure (17) is triggered for rejecting those workpieces (11) for which the estimated quality indication (35) meets a predetermined rejection criterion (15).

2. Method according to claim 1, wherein the training method (36) comprises a machine learning algorithm and/or the estimation model (21) comprises an artificial neural network and/or a decision tree and/or at least one of the following estimation algorithms (22):
- Random Forest,
- Support Vector Machine, SVM,
- XGBoost.

3. Method according to claim 2, wherein in the estimation model (21) multiple or all of the estimation algorithms (22) are operated in combination according to the majority voting principle (25).

4. Method according to any one of the preceding claims, wherein, for generating the inputs, a respective time signal (40) of at least one process variable (20) is scaled to a predetermined signal length (42) by means of a dynamic time warping (41) and is compared with a reference signal in the estimation model (21).

5. Method according to any one of the preceding claims, wherein the at least one process parameter (19) comprises at least one of the following process parameters: a sheet thickness of at least one of the workpieces (11), a geometry of the workpieces (11).

6. Method according to any one of the preceding claims, wherein the at least one process variable (20) comprises at least one of the following process variables: an intervention signal of a process controller in the joining process (12); a current strength, a voltage signal of a voltage strength, an electrical resistance, a transport speed of the sheet metal pieces and/or of a joining material.

7. Method according to any one of the preceding claims, wherein in the operating phase (38) more than 80% or all of the joined workpieces (11) are monitored by means of the estimation model (21).

8. Method according to any one of the preceding claims, wherein in the operating phase (38) the testing method (31) is applied to only some of the joined workpieces (11) or to none of the joined workpieces (11).

9. Method according to any one of the preceding claims, wherein the testing method (31) comprises an ultrasound test and the test signal (32) comprises an ultrasound image of a joint (13) generated by the joining process (12).

10. Method according to any one of the preceding claims, wherein the evaluation method comprises presenting the test signal (32) to an operator (33) at an operator interface and receiving a user input (34) from the operator (33) via the operator interface, which user input shows the quality indication (35).

11. Method according to any one of the preceding claims, wherein the rejection measure (17) comprises that the respective rejected workpiece (11) is inspected by means of the testing method (31) and/or is scrapped.

12. Method according to any one of the preceding claims, wherein the joining process (12) is a welding process, in particular resistance spot welding.

13. Processor circuit (14) for monitoring a joining process (12) of workpieces (11) in an automatic joining machine (10) by a method according to claim 1, wherein the processor circuit (14) is configured, in an operating phase (38) of the automatic joining machine (10), to determine process parameters (19) and process variables (20) of the joining process (12) of workpieces (11) and to supply them as input to an estimation model (21) and, by means of the estimation model (21) to generate a respective estimated quality indication (35) relating to the joined workpieces (11) and to trigger a rejection measure (17) for rejecting those workpieces (11) for which the estimated quality indication (35) meets a predetermined rejection criterion (15).

14. Automatic joining machine (10), in particular automatic welding machine, with a processor circuit (14) according to claim 13.

## Revendications

1. Procédé de surveillance d'un processus d'assemblage (12) de pièces (11) dans un automate d'assemblage (10), dans lequel
dans une phase d'entraînement (37) :
dans l'automate d'assemblage (10) et/ou dans au moins un autre automate d'assemblage (10), des pièces précurseures (30) sont assemblées au moyen du processus d'assemblage (12) et dans ce cas une image de processus (18) numérique formée à partir d'au moins un paramètre de processus (19) prédéterminé et d'au moins une variable de processus (20) mesurée et/ou calculée du processus d'assemblage (12) est capturée pour la pièce précurseure (30) respective, dans lequel les pièces précurseures (30) sont du même type que les pièces (11), et
au niveau des pièces précurseures (30) assemblées, un signal test (32) qui est corrélé à une qualité d'assemblage des pièces (11) assemblées, est déterminé au moyen d'une méthode d'essai (31) prédéterminée et une indication de qualité (35) signalant la qualité d'assemblage déterminée est générée au moyen d'une méthode d'évaluation et
un modèle d'estimation (21) de l'apprentissage machine est généré au moyen d'une méthode d'entraînement (36) prédéterminée, modèle qui reçoit en tant qu'entrée l'image de processus (18) numérique respective et une indication d'une qualité (35) estimée est attribuée à l'entrée en tant que sortie, indication qui est entraînée selon l'indication de qualité (35) signalée et
dans une phase de fonctionnement (38)
dans laquelle l'automate d'assemblage (10) assemble les pièces (11) au moyen du processus d'assemblage (12) :
l'image de processus (18) numérique du processus d'assemblage (12) de la pièce à usiner (11) respective est déterminée et est fournie au modèle d'estimation (21) en tant qu'entrée, et l'indication de qualité (35) estimée par rapport à la pièce (11) assemblée respective est générée au moyen du modèle d'estimation (21) et
pour les pièces (11) assemblées par l'automate d'assemblage (10), une mesure de triage (17) est déclenchée pour trier les pièces pour lesquelles l'indication de qualité (35) estimée remplit un critère de triage (15) prédéterminé.

2. Procédé selon la revendication 1, dans lequel la méthode d'entraînement (36) comprend un algorithme d'apprentissage machine et/ou le modèle d'estimation (21) comprend un réseau neuronal artificiel et/ou un arbre de décision et/ou au moins l'un des algorithmes d'estimation (22) suivants
- Random Forest,
- Support Vector Machine, SVM,
- XGBoost.

3. Procédé selon la revendication 2, dans lequel plusieurs ou tous les algorithmes d'estimation (22) sont exploités de manière combinée dans le modèle d'estimation (21) selon le principe de sélection majoritaire (25).

4. Procédé selon l'une quelconque des revendications précédentes, dans lequel, pour la génération des entrées, un signal temporel (40) respectif au moins d'une variable de processus (20) est mis à l'échelle au moyen d'un Dynamic Time Warping (41) à une longueur de signal (42) prédéterminée et est comparé à un signal de référence dans le modèle d'estimation (21).

5. Procédé selon l'une quelconque des revendications précédentes, dans lequel l'au moins un paramètre de processus (19) comprend au moins l'un des paramètres de processus suivants : une épaisseur de tôle au moins d'une des pièces (11), une géométrie des pièces (11).

6. Procédé selon l'une quelconque des revendications précédentes, dans lequel le au moins une variable de processus (20) comprend au moins l'une des variables de processus suivantes : un signal d'intervention d'une commande de processus dans le processus d'assemblage (12° ; une intensité de courant, un signal de tension d'une intensité de tension, une résistance électrique, une vitesse de transport des morceaux de tôle et/ou d'un matériau d'assemblage.

7. Procédé selon l'une quelconque des revendications précédentes, dans lequel plus de 80 % ou toutes les pièces (11) assemblées sont surveillées dans la phase de fonctionnement (38) au moyen du modèle d'estimation (21).

8. Procédé selon l'une quelconque des revendications précédentes, dans lequel la méthode d'essai (31) est appliquée uniquement à quelques-unes des pièces (11) assemblées ou à aucune des pièces (11) assemblées.

9. Procédé selon l'une quelconque des revendications précédentes, dans lequel la méthode d'essai (31) comprend un contrôle par ultrasons, et le signal d'essai (32) comprend une image à ultrasons d'un point d'assemblage (13) généré par le processus d'assemblage (12).

10. Procédé selon l'une quelconque des revendications précédentes, dans lequel la méthode d'évaluation comprend que le signal d'essai (32) est présenté à un opérateur (33) au niveau d'une interface de commande, et une entrée utilisateur (34) de l'opérateur (33) qui indique l'indication de qualité (35) est reçue par le biais de l'interface de commande.

11. Procédé selon l'une quelconque des revendications précédentes, dans lequel la mesure de triage (17) comprend que la pièce (11) triée respective est examinée et/ou mise au rebut au moyen de la méthode d'essai (31).

12. Procédé selon l'une quelconque des revendications précédentes, dans lequel le processus d'assemblage (12) est un processus de soudage, en particulier un soudage par résistance par points.

13. Circuit de processeur (14) pour la surveillance d'un processus d'assemblage (12) de pièces (11) dans un automate d'assemblage (10) avec un procédé selon la revendication 1, dans lequel le circuit de processeur (14) est conçu afin de déterminer dans une phase de fonctionnement (38) de l'automate d'assemblage (10) des paramètres de processus (19) et des variables de processus (20) du processus d'assemblage (12) de pièces (11) et de les fournir à un modèle d'estimation (21) en tant qu'entrée et de générer au moyen du modèle d'estimation (21) une indication de qualité (35) estimée respective par rapport aux pièces à usiner (11) assemblées et de déclencher une mesure de triage (17) pour trier les pièces à usiner (11) pour lesquelles l'indication de qualité (35) estimée remplit un critère de triage (15) prédéterminé.

14. Automate d'assemblage (10), en particulier automate de soudage, avec un circuit de processeur (14) selon la revendication 13.
